# NEW EUROPEAN PATENT SPECIFICATION

(11) **EP 0 236 099 B2**
(45) Date of publication and mention of the opposition decision: **01.12.2004**
(45) Mention of the grant of the patent: 20.04.1994
(21) Application number: 87301779.2
(22) Date of filing: 27.02.1987
(51) Int. Cl.: B32B 27/08

(54) **Oxygen barrier packaging film**
Verpackungssauerstoffsperrfilm
Film d'emballage barrière d'oxygène

(30) Priority: 28.02.1986 US 834694; 21.03.1986 US 842600; 21.03.1986 US 842321
(43) Date of publication of application: 09.09.1987
(60) Divisional application: 93108323.2
(73) Proprietor: Cryovac, Inc., Duncan, South Carolina 29334-0464 (US)
(72) Inventor: Fant, Ennis M., Greenville South Carolina 29607 (US); Shah, Gautam P., Simpsonville South Carolina 29681 (US)
(74) Representative: Duckworth, Timothy John

(56) References cited:
- EP-A- 0 101 613
- EP-A- 0 126 568
- EP-A- 0 149 321
- EP-A- 0 151 462
- EP-A- 0 169 640
- DE-A- 3 035 474
- FR-A- 2 516 017
- GB-A- 2 018 676
- JP-B- 6 027 000
- US-A- 4 284 674
- US-A- 4 355 721
- US-A- 4 398 635
- US-A- 4 405 667
- US-A- 4 407 873
- US-A- 4 421 823
- US-A- 4 501 798
- US-A- 4 514 465
- US-A- 4 561 920
- US-A- 4 588 648
- Kunststoffe 71 (1981) 9, pp. 530-538
- Drawing BFW5-0-1Z (14.02.1985)

## Description

This invention relates generally to packaging films and more particularly to films useful in the packaging of food products.

Thermoplastic film, and especially films of polyolefin materials, have been used in the past to package various articles including perishable food products which require protection from the environment, resistance to physical and environmental abuse during storage and distribution, and an aesthetic and attractive appearance. Optical qualities such as high gloss, high clarity, and low haze contribute to the aesthetic consumer appeal of products wrapped in such packaging materials. Good optical properties also permit adequate inspection of the packaged product during the distribution cycle and by the end-user at point of purchase.

Oxygen barrier characteristics are required to provide extended shelf life for the packaged product in the case of food items, and various materials have been used to provide lower gas permeability and thereby reduce the oxygen transmission of the film. For example, ethylene vinyl alcohol copolymer (EVOH) has been known for some time as a good oxygen barrier material, and has been used in the past in multilayer packaging films, as described below in several patent publications. EVOH has also proved to be a good barrier to odors or fragrances.

Good heat seal strength is an essential prerequisite for thermoplastic films used in applications where a contained product puts stress on the heat seals, such as the transverse seals of pouches, bags, and other packaging made from such film. It is therefore advantageous to have a packaging film with improved heat seal strengths at given sealing temperatures, and a lower range of heat seal temperatures.

A shrink feature may be imparted to a thermoplastic film by orientation of the film during its manufacture. This shrink feature allows the film to shrink or, if restrained, create shrink tension within the packaging film on exposure to heat, for example, in a hot water bath or by exposure to hot air. In a typical process, manufactured film is stretched in either the machine direction or perpendicular to the machine direction, or both, i.e. in the longitudinal and transverse directions respectively, in varying degrees to impart a desired degree of shrinkability to the film upon subsequent heating. After this stretching operation, the film is rapidly cooled to impart this latent shrinkability to the resulting film. Shrinkable film provides a tight, smooth appearance to a product wrapped in such film as well as some added toughness in order to protect the packaged product from abuse.

It is sometimes also desirable to orient the packaging film and thereafter heat set the film by bringing the film to a temperature near its orientation temperature. This produces a film with substantially less shrinkability, while retaining much of the advantages of orientation, including improved modulus and optical properties.

Finally, it is common practice in packaging some goods, including food items, to use what is generally known as form-fill-seal equipment. In the vertical form-fill-seal arrangement, flexible packaging material is fed from a roll stock to a tube former where a tube is fashioned from the sheet material into a vertically dependent, upwardly open tube having overlapping longitudinal edges. These overlapping edges are subsequently sealed together longitudinally by means well known in the art and the end of the tube is sealed together by a pair of transverse heat seals which are vertically spaced apart. At this point the tube is filled with a measured quantity of the product to be packaged. A second heat sealing operation, typically performed after the filled tube has been downwardly advanced, completes enclosure of the product. Simultaneously with or shortly after the transverse heat sealing step the tube is completely transversely severed by known cutting means in a space between the vertically spaced apart pair of transverse heat seals. Thereafter the tube is downwardly advanced and the cycle is successively repeated so as to form a multiplicity of individually packaged products.

Alternatively, a single transverse heat seal including a pair of horizontally spaced apart sealing jaws may be used to form in effect two vertically adjacent heat seals which are simultaneously or subsequentially severed at a line vertically intermediate the heat seals.

Flexible packaging material useful for this as well as other applications typically must meet stringent requirements imposed by the particular food or other article to be packaged. In some cases, for example in high acid foods such as tomato paste and other tomato products, the package must be capable of adequately protecting the food item after packaging and through the distribution cycle until the packaged product reaches the end user at point of sale.

Additionally, products such as those described above are sometimes introduced into the formed tube at relatively high temperatures of about 200 °F (93 °C). The formed package must be able to withstand the still relatively high temperatures of the food product immediately after packaging, and subsequent cooling operations to bring the package to room temperature or other desired temperature range.

The flexible material must also have sufficient abuse resistance to physical and mechanical abuse imposed by the entire form fill seal or other packaging system, and the subsequent abuse which the package may undergo during the distribution cycle.

U.S. Patent No. 4,064,296 issued to Bornstein et al discloses a film formed by the coextrusion of hydrolyzed ethylene vinyl acetate (HEVA) with outside layer of, for example, ethylene vinyl acetate copolymer (EVA).

Of interest is U.S. Patent No. 4,284,674 issued to Sheptak and disclosing a multilayer film having a core layer of ethylene vinyl alcohol copolymer adhered on each side to nylon, each nylon layer in turn being adhered to a chemically modified polyolefin, and a further layer of primer material suitable to adhere the modified polyolefin to an outer layer of polypropylene or other materials suitable for conveying toughness, flex crack resistance and moisture barrier properties to the multiply film.

U.S. Patent No. 4,347,332 issued to Odorzynski et al discloses a film having a blend of nylon and ethylene vinyl alcohol copolymer.

Of interest is U.S. Patent No. 4,355,721 issued to Knott et al and disclosing a coextruded multilayered sheet having a first layer of nylon, an EVOH barrier layer, another layer of nylon, an adhesive layer, and another outside layer of, for example, high density polyethylene.

Of interest is U.S. Patent No. 4,398,635 issued to Hirt and disclosing a medication package in which a coextruded multiple layer sheet may have a structure including a layer of ethylene vinyl alcohol copolymer sandwiched between adjacent layers of nylon, and in which one of the nylon layers may be further adhered to a tie resin. The nylon layers may form either an outside surface or, in one example, internal layers with additional layers of polymeric materials added to each side of the sandwich structure.

Of interest is U.S. Patent No. 4,400,428 issued to Rosenthal et al, which discloses a composite film having a biaxially oriented polypropylene base film (BOPP) laminated on at least one surface with a multilayer structure including a gas barrier layer of a hydrolyzed ethylene vinyl acetate copolymer and a layer adjacent to the base film, and a heat sealable outer layer which may be for example modified polypropylene/ethylene copolymer. Adhesion-promoting layers of modified polyolefin may include polypropylene containing grafted units of alpha, beta-monounsaturated dicarboxylic acids.

U.S. Patent No. 4.407,873 issued to Christensen et al. discloses a packaging material for retort applications including a heat seal layer of linear low density polyethylene, a second layer of linear low density polyethylene with optionally 0% to 80% medium density polyethylene blended into the second layer, a third layer of anhydride modified medium density polyethylene, a fourth layer of nylon, a fifth layer of ethylene vinyl alcohol copolymer, and a sixth layer of nylon.

Of interest is U.S. Patent No. 4,421,823 issued to Theisen et al directed to a flexible wrapping material of limited construction having a biaxially oriented polypropylene/oxygen barrier substrate, in which the oxygen barrier material may be EVOH; an extrusion laminate of a biaxially oriented polymer such as polypropylene or nylon, bonded to polyethylene; and a layer of heat sealable polymeric material such as ethylene vinyl acetate copolymer laminated to the substrate. A special polymer which may be, for example, polyethylene or ethylene vinyl acetate copolymer is bonded to one surface of the biaxially oriented polypropylene.

Of interest is U.S. Patent No. 4,457,960 issued to Newsome, disclosing a multi-layer film having a core layer of a barrier material such as EVOH and EVOH blends. This film may be shrinkable and may be melt extruded, and may contain outside layers having a blend of linear low density polyethylene and ethylene vinyl acetate copolymer.

Also of interest is U.S. Patent No. 4,464,443 issued to Farrell et al, disclosing the use of EVOH in a five layer structure having outside layers of high density polyethylene and intermediate layers of Plexar adhesive.

Of interest is U.S. Patent No. 4,495,249 issued to Ohya et al, disclosing a five layer film having a core layer of saponified copolymer of ethylene and vinyl acetate, two outer layers of a mixture of linear low density polyethylene and ethylene vinyl acetate copolymer, and two adhesive layers disposed between the core layer and outer layers.

U.S. Patent No. 4,501,797 issued to Super et al discloses an unbalanced oriented multiple layer film including a first layer of polypropylene, a second layer of an anhydride modified polypropylene, and a third layer of ethylene vinyl alcohol copolymer.

Of interest is U.S. Patent No. 4,501,798 issued to Koschak et al disclosing the use of a blend of EVOH and nylon in an unbalanced multiple layer polymer film, also including either a linear low density polyethylene or ethylene vinyl acetate copolymer in a sealant layer. Adhesive layers of preferable anhydride derivatives are also present.

Finally, of interest is U.S. Patent No. 4,514,465 issued to Schoenberg disclosing a five layer thermoplastic film having surface layers comprising a four component blend of linear low density polyethylene, linear medium density polyethylene, ethylene vinyl acetate copolymer and at least one ultraviolet light stabilizer.

The present invention provides a coextruded thermoplastic multilayer film characterized by good oxygen barrier properties and having an aesthetically pleasing appearance with good optical properties such as clarity. The multilayer film may be a relatively thin thermoplastic multilayer film having superior toughness and abrasion resistance which may be totally coextruded and then oriented to provide a shrinkable film with good oxygen barrier properties. The coextruded thermoplastic multilayer film of the invention is preferably substantially free of voids in the barrier material of the film. It has good heat seal strength characteristics, and may be heat sealed at relatively low temperatures.

In accordance with the invention, a coextruded multilayer film comprises (a) a core layer comprising ethylene vinyl alcohol copolymer; (b) two outer layers each comprising a polymeric material or a blend of polymeric materials; (c) two layers each adhering to opposite respective surfaces of the core layer, and comprising a polyamide and (d) two interior layers each comprising an adhesive polymeric material to bond the outer layers (b) to the intermediate polyamide-containing layers (c), said adhesive polymeric material comprising an acid- or acid anhydride-modified polyolefin,
wherein said film is a biaxially oriented shrink film having a thickness from 0.5 to 4 mils (0.013 to 0.1mm) after orientation and oriented by heating and stretching to realign the molecular configuration by a racking or blown bubble process at a racking ratio of between 3.0 and 5.0 times the original dimensions of the'film in the longitudinal and transverse directions.

The invention also provides a method of making an oriented multilayer shrink film having a thickness of from 0.5 to 4 mils (0.013 to 0.1 mm) comprising the steps of:
a) coextruding a core layer comprising an ethylene vinyl alcohol copolymer, two outer layers each comprising a polymeric material or a blend of polymeric materials, two polyamide layers each adhering to opposite respective surfaces of the.core layer and two interior layers each comprising an adhesive polymeric material to bond the outer layers to the intermediate polyamide-containing layers, said adhesive polymeric material comprising an acid- or acid anhydride-modified polyolefin;
b) cooling the coextruded film;
c) collapsing the cooled film; and
d) heating the collapsed film to its orientation temperature range, and stretching and orienting the heated film at a racking ratio of between 3.0 and 5.0 times the original dimensions of the film in the longitudinal and transverse directions.

### DEFINITIONS

"Intermediate layer", "interior layer", and the like are used herein to define a layer in a multilayer film adhered on both sides to other layers.

The term "oriented" and the like is used herein to define a polymeric material which has been heated and stretched to realign the molecular configuration, this stretching accomplished by a racking or a blown bubble process. A thermoplastic material stretched in one direction only is uniaxially oriented, and a material stretched in a longitudinal as well as transverse direction is considered biaxially oriented.

The term "ethylene vinyl alcohol copolymer", "EVOH" and the like is used herein to include saponified or hydrolyzed ethylene vinyl acetate copolymers, and refers to a vinyl alcohol copolymer having an ethylene comonomer, and prepared by, for example, hydrolysis of vinyl acetate copolymers, or by chemical reactions with polyvinyl alcohol. The degree of hydrolysis is preferably at least 50% and more preferably at least 85%. The ethylene comonomer is generally present in the range of about 15 to about 65 mole%.

The term "racking" is used herein to define a well known process for stretching coextruded and reheated multilayer film by means of tenter framing or blown bubble processes.

The terms "ethylene propylene copolymer", "EPC", and the like are used herein to denote polypropylene copolymerized with small amounts of ethylene comonomer.

The terms "linear low density polyethylene", "LLDPE", and the like are used herein to describe copolymers of ethylene with one or more comonomers selected from preferably C₄ to C₁₀ alpha-olefins such as butene-1, octene, etc. in which the molecules of the copolymers comprise long chains with few side chain branches or cross-linked structures. This molecular structure is to be contrasted with conventional low or medium density polyethylenes which are more highly branched than their respective counterparts. LLDPE may also be characterized by the low pressure, low temperature processes used to produce these materials. LLDPE as defined herein has a density usually in the range of from about 0.916 grams/cubic centimeter to about 0.925 grams/cubic centimeter.

The terms "linear medium density polyethylene", "LMDPE", and the like are used herein to refer to copolymers as described above and having a density usually in the range of about 0.926 grams/cubic centimeter to about 0.941 grams/cubic centimeter.

The terms "ethylene vinyl acetate copolymer", "EVA", and the like are used herein to refer to a copolymer formed from ethylene and vinyl acetate monomers wherein the ethylene derived units in the copolymer are present in major amounts, preferably between about 60% and 98% by weight and the vinyl acetate derived units in the copolymer are present in minor amounts, preferably between about 2% and 40% by weight of the total.

The term "polyamide" refers to high molecular weight polymers having amide linkages along the molecular chain, and refers more specifically to synthetic polyamide such as various nylons. This term also refers to copolymers of polyamides such as nylon 6 and nylon 12.

The term "anti-blocking agent" is used herein to describe substances that reduce the tendency of films or sheets of polyolefin films to stick or adhere to each other or to other surfaces when such adhesion is otherwise undesirable. Typical chemicals such as colloidal silica, finely divided silica, clays, silicones, and certain amides and amines are useful in this application.

The terms "very low density polyethylene", "VLDPE" and the like as used herein refer to linear polyethylene copolymers having a density usually in the range of less than about 0.910 grams per cubic centimeter to about 0.860 grams per cubic centimeter.

All compositional percentages used herein are calculated on a "by weight" basis, unless otherwise indicated.

### BRIEF DESCRIPTION OF THE DRAWINGS

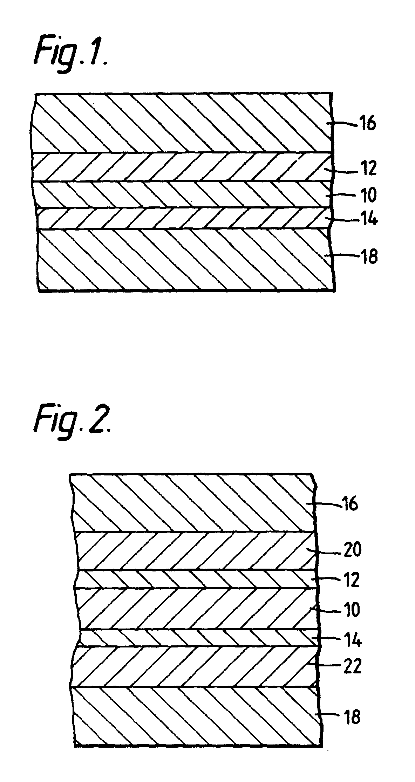

Further details are given below with reference to the drawing figures wherein Figure 1 is a schematic cross section of a five layer multilayer film provided for reference purposes, and Figure 2 is a schematic cross section of a seven layer embodiment in accordance with the invention.

### DESCRIPTION OF THE PREFERRED EMBODIMENTS

Referring specifically to the drawings, in Figure 1, a schematic cross section of a five layer coextruded multilayer film is shown. This film structure provided for reference purposes is directed to a multilayer film having the generalized structure of A/B/C/B/A where A is an outer layer, B is an intermediate adhesive layer, and C is a core layer containing a barrier material. Preferably, the outer layers A each comprise about 35% of the total multilayer film thickness; the intermediate layers B each comprise about 10% of the film thickness, and the barrier layer C about 10% of the total film thickness. For shrink film applications, the total thickness of the multilayer film is preferably between about 0.5 and 2.0 mils (0.013 to 0.05 mm), and more preferably between about 0.75 and 1.5 mils (0.02 to 004 mm). Even more preferably, an oriented five layer multilayer film is about 1 mil (0.025 mm) thick. Preferably, core layer 10 is an ethylene vinyl alcohol copolymer. This core layer is preferably between about .05 and 1 mil (0.025 mm) thick and more preferably about 0.1 mil (0.0025 mm) thick. Thicknesses less than about .05 mils (0.0013 mm) result in a very thin film which may exhibit voids in the core layer due to incidental variations in layer thickness. Thicknesses greater than about 1 mil (0.025 mm), on the other hand, make the film difficult to stretch or rack, and also result in increased costs due to the relatively expensive barrier component. Ethylene vinyl alcohol copolymer resins having an ethylene content of between about 28% and 49% are preferred. One such suitable EVOH is EVAL H commercially available from EVALCA.

Orienting EVOH to produce a heat shrinkable film has proven to be difficult. During the stretching or racking step for orienting such a film, the EVOH can sometimes develop voids. This phenomenon can result in some loss of oxygen barrier properties, which can affect, i.e. reduce the effective shelf life of, food products packaged in the EVOH film. The presence of voids in the EVOH layer can also result in the discoloration of a food product, such as processed meat, and therefore reduce the appearance and market value of a packaged food item.

It is therefore desirable in certain applications to blend the EVOH of the core layer with between 1% and 20% of a polyamide resin. The polyamide may be a polymer or copolymer comprising polyamide comonomers. When such a blend is used, the EVOH preferably comprises between about 80% and 99% by weight of the blend, and the polyamide comprises between about 1% and 20% by weight of the blend. More preferably, the blend comprises about 90% by weight of an ethylene vinyl alcohol copolymer, and about 10% of a polyamide.

To insure adequate adhesion of outer layers 16 and 18 to core layer 10, intermediate adhesive layers 12 and 14 in the five layer embodiment (see Figure 1) are provided. These are acid or acid anhydride-modified polyolefinic materials which can bond the core layer 10 to the outer layers 16 and 18. This material preferably includes a graft copolymer of a polyolefin, such as polyethylene, substrate with an unsaturated carboxylic acid or acid anhydride, blended with polyolefin, such as polyethylene. The particular adhesive polymer material selected for intermediate layers 12 and 14 is dependent on the polymeric material or blend of materials selected for outer layers 16 and 18. For example, in the case of a blend of LLDPE/LMDPE/EVA in outer layers 16 and 18, a very suitable adhesive material is Plexar 2581 (Norchem), a linear low density polyethylene-based adhesive. Generally, preferred adhesives are those having blends of a graft copolymer of a linear low density polyethylene and at least one unsaturated, fused ring carboxylic acid anhydride blended with one or more resins such as linear low density polyethylene, although other adhesives such as low density polyethylene-based adhesives, can also be used.

In the case of ethylene propylene copolymer, polypropylene, or blends thereof used as an outer layer, a suitable polymeric adhesive material is Modic P310H, a polypropylene based modified adhesive. Other adhesives such as Admer QF500 (also a polypropylene based modified adhesive) available from Mitsui are also suitable for use in connection with this particular blend material.

Adhesive layers 12 and 14 will each comprise from about 5% to about 15% of the total thickness of the five layer film, and more preferably about 10% of the total thickness of the film.

Outer layers 16 and 18 can also comprise a LLDPE or a blend of LLDPE and VLDPE with preferably from about 70% to about 80% by weight of LLDPE, and from about 20% to about 30% by weight of VLDPE. More preferably, this blend comprises about 75%, by weight, of LLDPE and about 25% by weight of VLDPE.

The seven layer film structure is directed to a multilayer film according to the invention having the generalized structure of A/B/C/D/C/B/A where A is an outer layer, B is an adhesive layer, C is an intermediate layer, and D is a barrier core layer.

In the seven layer embodiment (see Figure 2) core layer 10 is adhered on both surfaces to intermediate layers 12 and 14 respectively, which comprise polyamide, and more preferably, a copolymer of nylon 6 and nylon 12. Various nylons are suitable in connection with the present invention including high viscosity versions and nylon copolymers. The polyamide of the intermediate layers 12 and 14 adds strength to the resulting multilayer film structure. A suitable commercially available nylon copolymer is Grillon CA-6, having a composition of about 60% nylon 6 and about 40% nylon 12 by weight. This resin is available from Emser Industries. Another suitable nylon copolymer is CR-9, having 20% to 30% nylon 6 and 70% to 80% nylon 12 by weight. Nylon 12 alone as polymeric material could be used in intermediate layers 12 and 14; nylon 6 could also be used alone, but is less preferred because of incompatibility with the ethylene vinyl alcohol copolymer of core layer 10 in terms of melt temperature. The total thickness of the polyamide layers may vary widely, and it ranges for example between 5% and 25% of the total thickness of the seven layer film.

In applications such as vertical form fill seal, the seven layer film is an unoriented film in which outer layers A each comprise preferably about 26% of the total multilayer film thickness; adhesive layers B each comprise preferably about 8% of the total film thickness; the intermediate layers C each comprise about 11% of the total film thickness; and the barrier core layer D comprises preferably about 10% of total film thickness. A preferred film thickness for a form-fill-seal application is about 5 mils (0.13 mm). In this application, commercially available and useful resins include Eval EC-F101 (EVALCA), Nippon Goshei Soarnol D, D T, Z, and L, and Solvay Clarene R.

This unoriented film, which is not within the scope of the claims, preferably includes outer layers 16 and 18 having a linear low density polyethylene blended with an anti-blocking agent. This blend contributes pliability to the resulting film, and has the quality of permitting heat sealing of the film even in the presence of contamination in the sealing areas of the film. Several anti-blocking agents are available for use in connection with the outer blend layers 16 and 18. Particularly useful are micron-sized silica such as that available from Teknor Apex. This silica is available under the trade designation EPE-8160. Also commercially available is Syloid from W.R. Grace & Co. A very suitable linear low density polyethylene is Dowlex 2035 available from Dow Chemical Company.

The anti-blocking agent of the outer layers of the unoriented film is necessary to prevent the multilayer film from sticking to the forming mandrel during a form-fill-seal operation, with the detrimental effect on filling operations which this would cause. The agent is preferably included in amounts of from about 1% to about 15% by weight of the blend layers, more preferably from about 5% to about 10% by weight. Inadequate anti-blocking agent i.e. below 1% will result in the film sticking to the forming mandrel or shoe as it is formed, and the film material will not machine well on form-fill-seal equipment. A content above 15% could result in a progressive decrease in seal strength.

In the production of such a film, the linear low density polyethylene resin and the anti-blocking agent are blended in the proportions and ranges desired as discussed above. The resins are usually purchased from the supplier in pellet form and can be blended in any one of a number of commercially available blenders as is well known in the art. The anti-blocking agent is generally provided in particulate form for example as a powder.

The linear low density polyethylene resin and anti-blocking agent, as a blend are then fed into the hoppers of two extruders which feed a coextrusion die. The ethylene vinyl alcohol copolymer resin, the polyamide resin, and the adhesive resin are likewise fed into respective extruders which feed the coextrusion die. For a preferred seven layer film having two identical surface layers, two identical adhesive layers and two identical intermediate layers and a core layer of ethylene vinyl alcohol copolymer, i.e. a symmetrical seven layer structure, at least five extruders are required. Additional extruders may be employed if a film having non-identical adhesive or intermediate layers is desired. The materials are coextruded as a relatively thick tube or "tape" which has an initial diameter depending upon the diameter of the coextrusion die. Circular coextrusion dies are well known to those in the art and can be purchased from a number of manufacturers. In addition to tubular coextrusion, slot dies could be used to coextrude the material in sheet form.

While a substantially unoriented seven layer embodiment has been described above, it is a subject of the present application to provide a seven layer structure having a shrink feature i.e. shrinkability when exposed to hot air or hot water. A method of producing such a film comprises the steps of coextruding a core layer of ethylene vinyl alcohol copolymer, two intermediate layers of a polyamide, two layers of an adhesive polymeric material, and two outer layers, followed by rapidly cooling the coextruded film, collapsing the cooled film, heating the collapsed film to its orientation temperature range, and stretching and orienting the heated film, as defined in claim 6.

Preferred materials for the outer surfaces of such a seven layer oriented film are combinations of LLDPE with LMDPE and EVA, or with VLDPE.

The first blend mentioned, containing LLDPE, LMDPE and EVA preferably contains small amounts of slip and anti-block additives. Preferably from about 40% to about 60% by weight of the blend comprises LLDPE, from about 20% to about 30% by weight comprises LMDPE, and about 20% to about 30% by weight comprises EVA. More preferably, the blend comprises about 50% LLDPE, 25% LMDPE, and about 25% EVA. A small percentage of the EVA portion actually comprises the small amounts of slip and anti-block additives typically added at some time during the blending process and prior to extrusion of the blended material. In a seven layer embodiment with the three component blend just described, the outer layers 16 and 18 (see figure 2) preferably each comprises from about 20% to 40% and more preferably from about 25% to about 35% of the total thickness of the multi-layer film. Even more preferably, each of outer layers 16 and 18 comprise about 30% of the total thickness of the multilayer film of the invention. A suitable LLDPE resin is Dowlex 2045 available from Dow Chemical Co., having a melt flow index of from about 0.7 to about 1.2 grams/10 minutes (ASTM-D1238,E-28). This resin is a copolymer of ethylene and octene with a density at 23 °C of about 0.920 grams/cubic centimeter. Another suitable resin is Exxon 3001.

A suitable LMDPE is Dowlex 2037 also available from Dow Chemical Co., and comprising a copolymer of ethylene and octene with a density at 23°C of about 0.935 grams/cubic centimeter and a melt flow index of about 2.55 grams/ten minutes (ASTM-D-1238, E-28). The EVA of the outer layers 18 and 20 preferably has a vinyl acetate content of between about 3.5 and 9%, and more preferably between about 3.5 and 5% by weight. A suitable EVA resin for use in the present invention is El Paso PE204-CS95 available from El Paso Polyolefins Company. This material has a density at 23 °C of from about 0.923 to about 0.9250 grams/cubic centimeters in a melt flow (ASTMD1238,E-28) of about 2.0± 0.5 grams/ten minutes. The vinyl acetate content of this particular EVA is about 3.6 by weight.

In an alternate embodiment, outer layers 16 and 18 may comprise an ethylene propylene copolymer, polypropylene, or blends thereof. The polypropylene may be pre-blended with about 4% by weight of a silica-containing anti-block agent, about 5% by weight of amide waxes, and about 1% of a lubricating agent. The amide waxes are lubricating agents well known in the art as slip agents. In a blend, the polypropylene component of each of outer layers 16 and 18 preferably comprises from about 4% to about 15% by weight of outer layers 16 and 18, and more preferably about 10% by weight of the outer layers of the film. A suitable EPC is Norchem PP3003GK. A commercially available polypropylene to be blended with EPC is Himont PD064. The EPC-PP blend of outer layers 16 and 18 preferably comprises between about 25 and 35% of the total thickness of the multilayer film, and more preferably about 30% of the total thickness of the film.

Ethylene propylene copolymer and polypropylene may be individually used in the surface layer without blending thereof, but the use of polypropylene alone is less desirable in applications requiring shrinkability. The blend ratios of the EPC and polypropylene may be varied according to desired properties or the end use of the multilayer film. For example, increasing the polypropylene in the blend will add stiffness to the film, but also increase the sealing temperature of the film. Conversely, increasing the EPC in the blend tends to lower the shrink temperature of the oriented film, or to increase the shrink at the same temperature, and also lower the sealing temperature of the film.

The oriented films in accordance with the present invention are preferably cross linked, more preferably by irradiation with between about 3 and 13 megarads (M.R.) of irradiation, even more preferably between about 5 and 10 M.R., prior to orientation of the film. Orientation is done by racking or stretching the film at a racking ratio of between about 3.0 and 5.0 times the original dimensions of the film in the longitudinal (machine) and transverse directions. To orient the film e.g. in a blown bubble process, the coextruded and cooled tube is heated to its orientation temperature range. These ranges are well known for many polymeric materials, and are generally below the melting point of the film. Preferably, films made in accordance with the present invention are heated to between 90°C and 140°C and more preferably 105°C and 115°C.

Oriented multilayer films made in accordance with this invention provide good heat seal properties as well as abuse resistance, making these films useful for packaging food and non-food articles. The orientation of the multilayer films provides toughness and improved resistance to oxygen permeability, in addition to the advantages of a shrinkable film which may be heat shrunk about a product to be packaged. Oriented films of the present invention are from 0.5 to 4 mils (0.013 to 0.1 mm) thick, and preferably from about 0.5 to about 2 mils (0.013 to 0.05 mm) thick. Most preferably, these films are about 1 mil (0.025 mm) thick where 1 mil equals one thousandth of an inch. Orienting the multilayer films of the present invention becomes increasingly difficult for thicknesses greater than 2 mils (0.05 mm), and very difficult or impractical for thicknesses greater than about 4 mils (0.1 mm).

Embodiments of the film having outer layers 16 and 18 comprising EPC, polypropylene, or blends thereof are preferably irradiated.

The invention is illustrated in the following examples 1 to 6. Reference examples 1 and 2 will illustrate a five layer multilayer film for comparison purposes.

### REFERENCE EXAMPLE 1

A sample film was prepared by blending 75% of LLDPE (Dowlex 2045) and 25% VLDPE (DFDA 1137) blended with about 2% of a masterbatch concentrate containing slip and anti-block additives. This outer blend layer was coextruded with a core layer containing a blend of 90% EVOH (EVAL H) and 10% of a nylon 6/nylon 12 copolymer (Grillon CA-6), and an intermediate adhesive (Norchem Plexar 3150).

The Dowlex 2045 may be obtained from Dow Chemical Company. This is a copolymer of ethylene and octene and has a density at 23°C of about 0.920 grams per cubic centimeter and a melt flow index of from about 0.7 to about 1.2 grams per ten minutes (as measured by ASTM-D-1238, E-28). LLDPE adds toughness to the film.

The VLDPE has a preferred density of between 0.900 and 0.910 grams per cubic centimeter. A preferred resin is DFDA-1137 available from Union Carbide Corporation with a density of approximately 0.906 grams per cubic centimeter, a melt index of 0.721 grams per ten minutes, and a melting point of 244°F (118°C). This material is a butene based copolymer.

The EVOH of the core blend layer was EVAL H, available from EVAL Company of America and having an ethylene content of about 38% by weight and a melt index of about 1.5 grams/10 minutes. Other suitable EVOH resins include EVAL E, EVAL F, and EVAL K, as well as blends of the above, and preferably such resins of blends having a melt index of between about 1 to 4 grams per ten minutes (ASTM D 1238). Grillon CA-6, available from Emser Industries, was blended with the EVOH. The Grillon CA-6 is a nylon copolymer having about 60% nylon 6 and about 40% nylon 12 by weight.

Although nylon 12 would be effective alone as a blending material in the core layer, this is a relatively expensive material. Nylon 6 alone would be effective as a blending material, but with some difficulty in processing. The particular blend proved to be very advantageous in providing a core blend having the good barrier properties associated with EVOH, but with the processing and elongation advantages of nylon. Another suitable nylon copolymer is Grillon CR-9, having 20-30% nylon 6 and 70-80% nylon 12 by weight.

The intermediate adhesive material, Norchem Plexar 3150, is a low density polyethylene-based anhydride-modified resin produced by Norchem.

The polymer melt from the coextrusion die was then cooled and cast into a solid tape which was irradiated with about 8 megarads of irradiation. The tape was then heated to about 110°C in an oven and blown into a bubble. The bubble was expanded to about 3.5 times its original dimensions in both the machine (longitudinal) and transverse directions, and then deflated and ply separated into single wound film rolls. The final film had a thickness of about one mil (0.025 mm), and in addition to the shrink properties imparted by orientation, exhibited excellent toughness, good optics, burn out resistance, resistance to tear propagation, and heat sealability. The film also exhibited good abuse resistance and the necessary stiffness and lower tack required for packaging applications and was substantially free of voids in the EVOH/Polyamide blend layer.

### REFERENCE EXAMPLE 2

Another sample film was prepared similar in construction to the sample film of Reference Example 1, and prepared by a similar process. The LLDPE used in the outer layers of the sample was Exxon LL-3001.

The physical properties of the two sample films are set forth in Table 1 below.

**TABLE 1**

| PROPERTY | REFERENCE EXAMPLE 1 | REFERENCE EXAMPLE 2 | TEST PROCEDURE |
|---|---|---|---|
| Tensile Strength (PSI) (kPa) | | | |
| Longitudinal | 9,460 (65220) | 10,080 (69500) | ASTM D882-81 |
| Transverse | 8,260 (56950) | 9,300 (64120) | |
| | | | |
| Elongation at Break (Percentage) | 84 | 106 | ASTM D882-81 |
| | | | |

| Tear Propagation at 73°F (23°C) (Grams) | | | |
|---|---|---|---|
| Longitudinal | 14.00 | 17.63 | ASTM D1938-79 |
| Transverse | 13.69 | 21.13 | |
| | | | |

| Free Shrink at 240°F (116°C) (Percent) | | | |
|---|---|---|---|
| Longitudinal | 66 | 66 | ASTM D2732-70 |
| Transverse | 65 | 64 | |
| | | | |

| Shrink Tension at 195°F (91°C) (PSI) (kPa) | | | |
|---|---|---|---|
| Longitudinal | 292 (2010) | 348 (2400) | ASTM D2838-81 |
| Transverse | 360 (2480) | 377 (2600) | |
| | | | |
| Ball Burst Impact at 73°F (23°C) (CM-KG) | 11.1 | 13.6 | ASTM D3420-80 |
| | | | |

| Optical Properties at 73°F (23°C) | | | |
|---|---|---|---|
| Haze (Percent) | 5.7 | 3.1 | ASTM D1003 Method A |
| Clarity (Percent) | 59.1 | 68.6 | ASTM D1746 |
| Gloss (45°) | 71 | 85 | ASTM 2457 |
| | | | |

| Water Vapor Transmission at 100°F (38°C) | | | |
|---|---|---|---|
| Grams/24 hours, 100 sq. in. (645 cm²) 100% RH (Gauge-mils) (mm) | | | |
| | 0.97 | 0.82 | ASTM F 372 |
| | (1.06) (0.027) | (1.22) (0.03) | |
| | | | |

| Oxygen Transmission at 73°F (23°C) | | | |
|---|---|---|---|
| OC (STP/24 hours, sq. meter, ATM) 0% RH (Gauge-mils) (mm) | | | |
| | 9.5 | 8.6 | ASTM D3985-81 |
| | (1.03) (0.026) | (1.21) (0.031) | |

* not within the scope of the claims

### EXAMPLE 1 *

A seven layer multilayer film in accordance with the invention was prepared by blending 90% of LLDPE (Dowlex 2035), and 10% EPE-8160 anti-blocking agent. This outside blend layer was coextruded with a core layer containing EVAL F, and intermediate layers of Capron 8207 F, a nylon 6 resin available from Allied Corp. Plexar 3196, a linear low density polyethylene-based resin was used as an adhesive material.

The film exhibited an oxygen transmission rate averaging less than 0.2 cc STP/(24 hours, square meter, atmosphere) at 73°F (23 °C), 0% RH (ASTM D 3985) at a total film gauge of about 5.15 mils (0.131 mm). The film also had a water vapor transmission rate (grams/24 hours, 100 square inches or 645 cm², at 100% RH) of about 0.36 at 100°F (38°C) (ASTM F 372) at a total film gauge averaging about 5.20 mils (0.132 mm). Typical gauge of the barrier (EVOH) layer was 0.57 mils (0.014 mm). the substantially lower oxygen and water vapour transmission rates as compared with those of the five layer reference film of reference examples 1 and 2 can be seen from the figures in Table 1.

### EXAMPLE 2 *

A fourth sample film was produced substantially as described in Example 1, but with Plexar 2581 in place of the Plexar used in the previous example.

### EXAMPLE 3 *

A nine layer structure was produced substantially as described in Example 1, but having four blend layers of LLDPE and anti-blocking agent instead of only two such layers. The two outer layers of Example 3 were substantially the same as those in previous examples, but about half the thickness. On the interior or film side of each of the two outer layers, an additional layer of a blend of about 85% LLDPE and about 15% of another anti-blocking agent were provided, these third and fourth blend layers having about the same thickness as the two outer layers. The adhesive layers of this third sample film comprised Plexar 3196.

### EXAMPLE 4 *

A sixth sample film was prepared substantially as described in Example 1, and comprising nine layers as in Example 3, but with the substitution of Dowlex 2037 for the Dowlex 2035 of the interior third and fourth blend layers of Example 3.

### EXAMPLE 5

An oriented seven layer multilayer film in accordance with the invention was prepared by blending 50% of LLDPE (Dowlex 2045), 25% LMDPE (Dowlex 2037) and 17% EVA (El Paso PE204-CS95) having a vinyl acetate content of about 3.6%, blended with about 8% of a master batch concentrate containing slip and antiblock additives compounded with EVA of about 3.5% vinyl acetate content by weight.

The outer blend layer was coextruded with a core layer containing EVOH (EVAL-F); intermediate layers of a nylon 6-nylon 12 copolymer (Grillon CA-6); and two adhesive layers (Plexar 2581).

The polymer melts were coextruded through a multilayer coextrusion die and then cooled and cast into a solid tube which was irradiated with about 8 megarads of irradiation. The tube was then heated to about 110°C in an oven and then blown into a bubble. The bubble was expanded to about 3.3 times its original dimension in the machine (longitudinal) direction, and about 3.5 times its original dimension in the transverse direction and then deflated and ply separated into single wound film rolls. The final film had a thickness of about 1.3 mils (0.03 mm), and exhibited good shrink properties, toughness, and optical properties as well as high oxygen barrier characteristics.

Before orientation, the total wall thickness of the tube was about 14 mils (0.36 mm), with about 55% of the structure comprising the outer blend layers, 20% of the structure comprising the intermediate polyamide layers, 15% comprising the adhesive layers, and 10% comprising the EVOH core layer.

After stretching and orientation, the film had a total thickness of about 1.3 mils (0.03 mm).

The sample film produced in the process described above had tensile strengths at break of 10,630 psi (73290 kPa) and 11,550 psi (79630 kPa), and a modulus of 100,700 psi (694300 kPa) and 107,100 psi (738400 kPa), in the longitudinal and transverse directions respectively (ASTM D882-81 at 73°F, 23°C).

The film had a free shrink ranging from 20% and 25% at 200°F to 67% and 60% at 240°F (116°C) (longitudinal and transverse directions respectively) (ASTM D2732-70).

Shrink tension values varied from 338 psi (2330 kPa) and 446 psi (3070 kPa) at 200°F up to 425 psi (2930 kPa) and 453 psi (3120 kPa) at 240°F (116°C) (longitudinal and transverse directions respectively) (ASTM D2838-81).

The sample film exhibited a haze of 2.6% at 73°F (23°C) (ASTM D1003-61), a clarity of 66.7% at 73°F (23°C) (ASTM D1746-70) and a gloss of 91 at a 45° angle, 73°F (23°C) (ASTM D2457-70).

The film also exhibited an oxygen transmission at 73°F (23°C), 0% relative humidity of 1.9cc STP/(24 hours, square meter, atmosphere) (ASTM D3985-81), and an oxygen transmission at 73°F (23°C), 100% relative humidity of 369.3cc STP/(24 hours, square meter, atmosphere) (ASTM Journal of Testing and Evaluation, Volume 12, No. 3, May 1984, Pages 149-151).

This film is particularly useful in applications requiring good impact resistance and resistance to tear propagation. Interply bond strengths were actually greater than the strengths of the plys themselves. It is believed that useful odor barrier properties are obtained by the use of EVOH and intermediate layers of polyamide.

### EXAMPLE 6

Another sample film was made by the same method described above with respect to Example 5 except that a blend of ethylene propylene copolymer and polypropylene was used for the outer layers 16 and 18 of the film. Also, the adhesive material comprising layers 20 and 22 was Modic P310H, a polypropylene based polymeric adhesive. The ethylene vinyl alcohol of core layer 10 was EVAL-K having an ethylene content of about 38% by weight, and a relatively high melt index.

This sample film was not irradiated as in the case of Example 5.

The sample film had a total thickness after stretching and orientation of about 1.06 mils (0.027 mm), and the relative thickness of the various layers was substantially the same as in the sample film of Example 5.

Physical properties for the second sample were substantially similar to those described in Example 5, but with certain exceptions.

The modulus at 73°F was 146,100 PSI (1007300 kPa) and 140,200 PSI (966600 kPa) at 73°F, in the longitudinal and transverse directions respectively. This sample film, therefore, exhibited much less flexibility and stiffer properties than the sample of Example 5. Also, the clarity of this sample film was considerably less than that of Example 5. Oxygen transmission at 73°F (23°C), 100% relative humidity averages about 180 cc STP/(24 hours, square meter, atmosphere) as an average of three samples, which is a considerable improvement over the film of Example 5.

The film had a free shrink ranging from 20% and 25% at 200°F (93°C) to 46% at 240°F (116°C) (longitudinal and transverse directions respectively). Thus, free shrink is considerably less for this film than the film of Example 5.

The test methodology for Example 6 in determining physical properties was the same as that for Example 5 and listed above.

## Claims

1. A coextruded multilayer film comprising:
a) a core layer comprising an ethylene vinyl alcohol copolymer;
b) two outer layers each comprising a polymeric material or a blend of polymeric materials;
c) two layers each adhering to opposite respective surfaces of the core layer, and comprising a polyamide; and
d) two interior layers each comprising an adhesive polymeric material to bond the outer layers (b) to the intermediate polyamide-containing layers (c), said adhesive polymeric material comprising an acid- or acid anhydride-modified polyolefin,
wherein said film is a biaxially oriented shrink film having a thickness from 0.5 to 4 mils (0.013 to 0.1mm) after orientation and oriented by heating and stretching to realign the molecular configuration by a racking or blown bubble process at a racking ratio of between 3.0 and 5.0 times the original dimensions of the film in the longitudinal and transverse directions.

2. A multilayer film according to claim 1 wherein the outer layers (b) each comprise a linear low density polyethylene.

3. A multilayer film according to claim 1 wherein the outer layers (b) each comprise a blend of linear low density polyethylene, linear medium density polyethylene, and ethylene vinyl acetate copolymer.

4. A multilayer film according to claim 1 wherein the outer layers (b) each comprise a blend of linear low density polyethylene and very low density polyethylene.

5. A multilayer film according to claim 1 wherein the outer layers (b) each comprise polypropylene, an ethylene propylene copolymer, or a blend thereof.

6. A method of making an oriented multilayer shrink film having a thickness of from 0.5 to 4 mils (0.013 to 0.1 mm) comprising the steps of:
a) coextruding a core layer comprising an ethylene vinyl alcohol copolymer, two outer layers each comprising a polymeric material or a blend of polymeric materials, two polyamide layers each adhering to opposite respective surfaces of the core layer and two interior layers each comprising an adhesive polymeric material to bond the outer layers to the intermediate polyamide-containing layers, said adhesive polymeric material comprising an acid- or acid anhydride-modified polyolefin;
b) cooling the coextruded film;
c) collapsing the cooled film; and
d) heating the collapsed film to its orientation temperature range, and stretching and orienting the heated film at a racking ratio of between 3.0 and 5.0 times the original dimensions of the film in the longitudinal and transverse directions.

7. The method according to claim 6 further comprising cross-linking the collapsed film prior to heating the film to its orientation temperature.

8. The method according to claim 7 wherein the cross-linking is accomplished by irradiation of the collapsed film.

## Patentansprüche

1. Coextrudierte Mehrschichtfolie, die
a) eine Kernschicht, die Ethylen/Vinylalkohol-Copolymer umfaßt,
b) zwei Außenschichten, die jeweils polymeres Material oder eine Mischung von polymeren Materialien umfassen,
c) zwei Schichten, die jeweils an entgegengesetzten Oberflächen der Kernschicht haften und Polyamid umfassen, und
d) zwei Innenschichten umfaßt, die jeweils klebriges polymeres Material umfassen, um die beiden Außenschichten (b) an die Polyamid enthaltenden Zwischenschichten (c) zu binden, wobei das klebrige polymere Material säure- oder säureanhydridmodifiziertes Poly-olefin umfaßt,
wobei die Folie eine biaxial orientierte Schrumpffolie ist, die nach der Orientierung eine Dicke von 0,5 bis 4 mil (0,013 bis 0,1 mm) aufweist und durch Erhitzen und Strecken mittels eines Reckverfahren oder Verfahren der aufgeblasenen Blasen bei einem Reckverhältnis zwischen dem 3,0- und 5,0-Fachen der ursprünglichen Ausmaße der Folie in den Längs- und Querrichtungen orientiert worden ist, um die molekulare Konfiguaration auszurichten.

2. Mehrschichtfolie nach Anspruch 1, bei der die Außenschichten (b) jeweils lineares Polyethylen niederer Dichte umfassen.

3. Mehrschichtfolie nach Anspruch 1, bei der die Außenschichten (b) jeweils eine Mischung aus linearem Polyethylen niederer Dichte, linearem Polyethylen mittlerer Dichte und Ethylen/Vinylacetat-Copolymer umfassen.

4. Mehrschichtfolie nach Anspruch 1, bei der die Außenschichten (b) jeweils eine Mischung aus linearem Polyethylen niederer Dichte und Polyethylen sehr niederer Dichte umfassen.

5. Mehrschichtfolie nach Anspruch 1, bei der die Außenschichten (b) jeweils Polypropylen, Ethylen/Propylen-Copolymer oder eine Mischung derselben umfassen.

6. Verfahren zur Herstellung einer orientierten Mehrschichtschrumpffolie mit einer Dicke von 0,5 bis 4 mil (0,013 bis 0,1 mm), bei dem
a) eine Kernschicht, die Ethylen/Vinylalkohol-Copolymer umfaßt, zwei Außenschichten, die jeweils polymeres Material oder eine Mischung von polymeren Materialien umfassen, zwei Polyamidschichten, die jeweils an entgegengesetzten Oberflächen der Kernschicht haften, und zwei Innenschichten, die jeweils klebriges polymeres Material umfassen, um die Außenschichten an die Polyamid enthaltenden Innenschichten zu binden, coextrudiert werden, wobei das klebrige polymere Material säure- oder säureanhydridmodifiziertes Poly-olefin umfaßt,
b) die coextrudierte Folie abgekühlt wird,
c) die abgekühlte Folie zusammengelegt wird und
d) die zusammengelegte Folie auf ihren Orientierungstemperaturbereich erhitzt wird und die erhitzte Folie bei einem Reckverhältnis zwischen dem 3,0- und 5,0-Fachen der ursprünglichen Ausmaße der Folie in den Längs- und Querrichtungen gestreckt und orientiert wird.

7. Verfahren nach Anspruch 6, bei dem die zusammengelegte Folie ferner vor dem Erhitzen der Folie auf ihre Orientierungstemperatur vernetzt wird.

8. Verfahren nach Anspruch 7, bei dem die Vernetzung durch Bestrahlung der zusammengefalteten Folie bewirkt wird.

## Revendications

1. Film multicouche coextrudé comprenant :
a) une couche formant âme comprenant un copolymère d'éthylène-alcool vinylique ;
b) deux couches externes, chacune comprenant un matériau polymérique ou un mélange de matériaux polymériques ;
c) deux couches, chacune adhérant aux surfaces respectives opposées de la couche formant âme et comprenant un polyamide ; et
d) deux couches intérieures, chacune comprenant un matériau polymérique adhésif pour lier les couches externes (b) aux couches intermédiaires contenant du polyamide (c), ledit matériau polymérique adhésif comprenant une polyoléfine modifiée par un acide ou un anhydride d'acide,
où ledit film est un film rétracté biaxialement orienté ayant une épaisseur de 0,5 à 4 millièmes de pouce (0,013 à 0,1 mm) après orientation et orienté par chauffage et étirage pour réaligner la configuration moléculaire par un procédé d'étirage ou à la bulle soufflée à un rapport d'étirage compris entre 3,0 et 5,0 fois les dimensions originales du film dans les directions longitudinale et transversale.

2. Film multicouche selon la revendication 1, où les couches externes (b) comprennent chacune un polyéthylène linéaire de faible densité.

3. Film multicouche selon la revendication 1, où les couches externes (b) comprennent chacune un mélange d'un polyéthylène linéaire de faible densité, d'un polyéthylène linéaire de densité moyenne et d'un copolymère d'éthylène acétate de vinyle.

4. Film multicouche selon la revendication 1, où les couches externes (b) comprennent chacune un mélange d'un polyéthylène linéaire de faible densité et d'un polyéthylène de très faible densité.

5. Film multicouche selon la revendication 1, où les couches externes (b) comprennent chacune du polypropylène, un copolymère d'éthylène-propylène ou un mélange.

6. Méthode de production d'un film rétracté multicouche orienté comprenant les étapes de :
a) coextruder une couche formant âme comprenant un copolymère d'éthylène alcool vinylique, deux couches externes, chacune comprenant un matériau polymérique ou un mélange de matériaux polymériques, deux couches de polyamide, chacune adhérant aux surfaces respectives opposées de la couche formant âme et deux couches intérieures, chacune comprenant un matériau polymérique adhésif pour lier les couches externes aux couches intermédiaires contenant du polyamide, ledit matériau polymérique adhésif comprenant une polyoléfine modifiée par un acide ou un anhydride d'acide ;
b) refroidir le film coextrudé ; et
c) affaisser le film refroidi ; et
d) chauffer le film affaissé à sa gamme de température d'orientation et étirer et orienter le film chauffé à un rapport d'étirage compris entre 3,0 et 5 fois les dimensions d'origine du film dans les directions longitudinale et transversale.

7. Méthode selon la revendication 6, comprenant de plus la réticulation du film affaissé avant de chauffer le film à sa température d'orientation.

8. Méthode selon la revendication 7, où la réticulation est accomplie par irradiation du film affaissé.
